(19) Europäisches Patentamt
European Patent Office
Office européen des brevets

(11) **EP 2 772 675 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(51) Int Cl.:
*F16N 7/38* *(2006.01)*     *F16N 29/02* *(2006.01)*
*F01M 1/10* *(2006.01)*     *E21D 9/10* *(2006.01)*
*F16C 19/30* *(2006.01)*     *F16C 33/66* *(2006.01)*

(21) Anmeldenummer: **14155967.4**

(22) Anmeldetag: **20.02.2014**

(54) **Vorrichtung zur Schmierstoffzufuhr zu einer Schmierstelle in einer Maschine**

Device for supplying lubricant to a lubrication point in a machine

Dispositif d'acheminement de lubrifiant jusqu'à un point de lubrification dans une machine

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2013 DE 102013203263**

(43) Veröffentlichungstag der Anmeldung:
**03.09.2014 Patentblatt 2014/36**

(73) Patentinhaber: **SKF Lubrication Systems Germany AG**
**12277 Berlin (DE)**

(72) Erfinder:
• **Borek, Andreas**
 **68766 Hockenheim (DE)**

• **Kreutzkämper, Jürgen**
 **74915 Waibstadt-Daisbach (DE)**
• **Frank, Stefan**
 **68549 Ilvesheim (DE)**
• **Schuermann, Stefan**
 **69190 Walldorf (DE)**

(74) Vertreter: **Kuhstrebe, Jochen**
 **SKF GmbH**
 **Gunnar-Wester-Straße 12**
 **97421 Schweinfurt (DE)**

(56) Entgegenhaltungen:
**DE-A1- 2 227 467       DE-A1-102004 032 453**
**US-A1- 2003 062 197    US-A1- 2004 222 018**
**US-B1- 6 170 611       US-B1- 6 546 785**

EP 2 772 675 B1

**Beschreibung**

Ausführungsbeispiele beziehen sich auf Schmiersysteme von Maschinen und insbesondere auf eine Vorrichtung und ein Verfahren zur Schmierstoffzufuhr zu einer Schmierstelle in einer Maschine.

Viele Maschinen haben Teile die im Betrieb zueinander in Bewegung stehen. Um mögliche Beschädigungen durch aneinander reibende Teile möglichst gering zu halten, ist oft eine Schmiermittelzufuhr zu solchen Stellen notwendig. Bei Verbrauchs- oder Umlaufschmierungen muss über ein Schmiersystem kontinuierlich Schmierstoff an die Schmierstellen geführt werden. Da man eine Unterschmierung, also eine Zuführung von zu wenig Schmierstoff, in jedem Fall vermeiden möchte, nimmt man in vielen Fällen eine konstante Überschmierung in Kauf. Dies kann teilweise zu hohen Verlusten an Schmiermittel führen. Die Druckschrift US 6546785 offenbart beispielsweise ein Schmiersystem, das die Schmiermittelzufuhr basierend auf einer gemessenen Temperatur, Druck oder Viskosität steuert. Die Druckschrift US 2003/0062197 A1 lehrt einen Rollenkegelbohrer, der mindestens einen Rollenkegel umfasst, der drehbar an einem Meißelkörper montiert ist.

Es besteht daher Bedarf ein Konzept zur Schmiermittelzufuhr zu einer Schmierstelle in einer Maschine zu schaffen, das es ermöglicht den Schmiermittelverbrauch zu reduzieren. Der Bedarf kann durch eine Vorrichtung gemäß Anspruch 1 oder ein Verfahren gemäß Anspruch 13 gedeckt werden.

Eine Vorrichtung zur Schmierstoffzufuhr zu einer Schmierstelle in einer Maschine gemäß einem Ausführungsbeispiel umfasst eine Schmierstoffpumpeinheit und eine Steuereinheit. Die Schmierstoffpumpeinheit ist ausgelegt, um einer Schmierstelle Schmierstoff zuzuführen. Die Steuereinheit ist ausgelegt, um eine von der Schmierstoffpumpeinheit der Schmierstelle zugeführte Schmierstoffmenge basierend auf einem Sensormesssignal zu regeln. Dabei ist das Sensormesssignal von einer in einem Bereich der Schmierstelle gemessenen Temperatur, einem in einem Bereich der Schmierstelle gemessenen Druck, einer von dem Schmierstoff gemessenen Viskosität, einer von dem Schmierstoff gemessenen Dielektrizität, einem von dem Schmierstoff gemessenen Wassergehalt, einer an einem Teil der Maschine gemessenen Schwingungsstärke oder einer von einem Teil der Maschine gemessenen Drehzahl abhängig, sodass die Steuereinheit die zugeführte Schmierstoffmenge temperaturabhängig oder druckabhängig regelt.

Ausführungsbeispielen einer Vorrichtung zur Schmierstoffzufuhr zu einer Schmierstelle in einer Maschine liegt die Erkenntnis zugrunde, dass bei unterschiedlichen Betriebsbedingungen, nämlich bei unterschiedlichen Drücken, Temperaturen, Viskositäten des Schmiermittels, Dielektrizitäten des Schmierstoffs, Wassergehalten des Schmierstoffs, Schwingungsstärken und/oder Drehzahlen, unterschiedliche Schmierstoffmengen verbraucht werden, sodass die Schmierstoffzufuhr an die jeweiligen Betriebsbedingungen angepasst werden kann, um den Schmiermittelverbrauch zu reduzieren. Beispielsweise kann die Schmiermittelzufuhr bei geringeren Temperaturen niedriger gehalten werden als bei höheren Temperaturen, wenn das Schmiermittel bei niedrigeren Temperaturen eine höhere Viskosität aufweist. Ferner kann beispielsweise bei geringem Außendruck der Druck des Schmiermittels an der Schmierstelle auch reduziert werden, da es meist ausreicht, wenn der Druck an der Schmiermittelstelle geringfügig höher ist als außerhalb, sodass keine Verunreinigungen von außen in die Schmierstelle eindringen. Somit kann durch das beschriebene Konzept der Schmiermittelverbrauch in einer Maschine deutlich reduziert werden. Zusätzlich kann der Betriebszustand der Maschine sicherer gemacht werden, da die Gefahr einer Unterschmierung reduziert werden kann.

Bei einigen Ausführungsbeispielen weist die Vorrichtung zur Schmierstoffzufuhr eine Sensoreinheit auf, die einen Druck und eventuell auch eine Temperatur in dem Bereich der Schmierstelle misst und das von dem gemessenen Druck und eventuell auch der gemessenen Temperatur abhängige Sensormesssignal der Steuereinheit bereitstellt.

Einige Ausführungsbeispiele beziehen sich auf eine Verbrauchsschmiereinrichtung oder eine Umlaufschmiereinrichtung mit einer Vorrichtung nach dem beschriebenen Konzept.

Bei einigen Ausführungsbeispielen ist eine Dichtung zwischen der Schmierstelle und einem Außenbereich der Maschine angeordnet. Durch die Anpassung der Schmierstoffzufuhr in Abhängigkeit des Drucks und eventuell auch der Temperatur kann ein Verlust von Schmierstoff über die Dichtung nach außen deutlich reduziert werden.

Einige Ausführungsbeispiele werden nachfolgend, Bezug nehmend auf die beiliegenden Figuren, näher erläutert. Es zeigen:

Fig. 1   eine Vorrichtung zu Schmierstoffzufuhr in Form eines Schema eines Schmiersystems mit Schaltzeichen, am Beispiel mit Elektromotor-Antrieb;

Fig. 2   eine Vorrichtung zu Schmierstoffzufuhr in Form eines Schema eines Schmiersystems mit Schaltzeichen, am Beispiel mit Hydraulikmotor-Antrieb;

Fig. 3   eine Vorrichtung zu Schmierstoffzufuhr in Form eines Schema einer druckabhängigen automatischen hydraulischen Steuerung eines Förderstroms;

Fig. 4   ein Querschnitt durch einen Teil eines Bohrkopfs einer Tunnelbohrmaschine;

Fig. 5    ein Diagramm der geförderten Schmierstoffmenge über die Temperatur; und

Fig. 6    ein Diagramm der geförderten Schmierstoffmenge über den Druck.

Im Folgenden können bei unterschiedlichen, beschriebenen Ausführungsbeispielen teilweise für Objekte und Funktionseinheiten, die gleiche oder ähnliche funktionelle Eigenschaften aufweisen, gleiche Bezugzeichen verwendet werden. Des Weiteren können optionale Merkmale der verschiedenen Ausführungsbeispiele miteinander kombinierbar oder zueinander austauschbar sein.

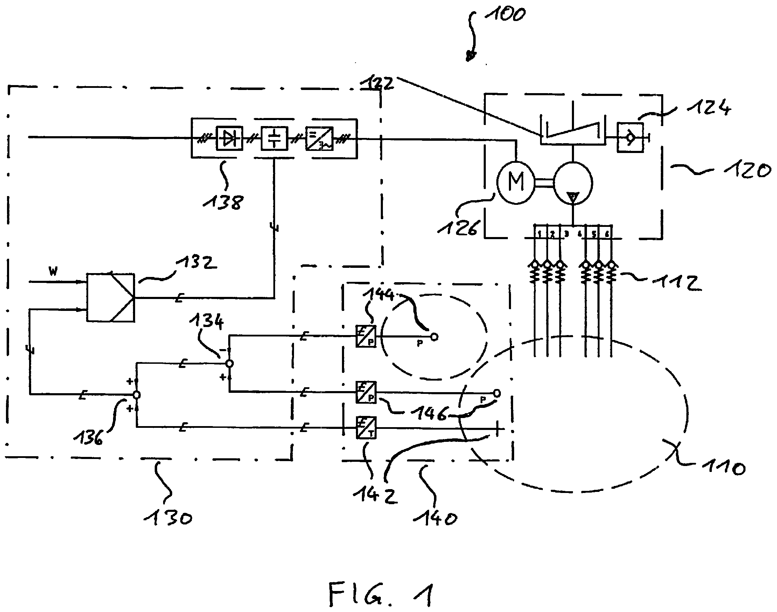

Fig. 1 zeigt ein Blockdiagramm einer Vorrichtung 100 zur Schmierstoffzufuhr zu einer Schmierstelle 110 in einer Maschine als ein Ausführungsbeispiel. Die Vorrichtung 100 umfasst eine Schmierstoffpumpeinheit 120 verbunden mit einer Steuereinheit 130. Die Schmierstoffpumpeinheit 120 führt einer Schmierstelle 110 Schmierstoff zu. Die Steuereinheit 130 ist mit der Schmierstoffpumpeinheit 120 verbunden und regelt eine von der Schmierstoffpumpeinheit 120 der Schmierstelle 110 zugeführte Schmierstoffmenge basierend auf einem Sensormesssignal. Das Sensormesssignal hängt von einer in einem Bereich der Schmierstelle 110 gemessenen Temperatur, einem in einem Bereich der Schmierstelle 110 gemessenen Druck, einer von dem Schmierstoff gemessenen Viskosität, einer von dem Schmierstoff gemessenen Dielektrizität (oder einer Dielektrizitätskonstanten), einem von dem Schmierstoff gemessenen Wassergehalt, einer an einem Teil der Maschine gemessenen Schwingungsstärke und/oder einer von einem Teil der Maschine gemessenen Drehzahl ab, sodass die Steuereinheit 130 die zugeführte Schmierstoffmenge druckabhängig und eventuell auch temperaturabhängig, viskositätsabhängig, vibrationsabhängig und/oder drehzahlabhängig regelt.

Durch die Regelung der Schmierstoffzufuhr in Abhängigkeit von einem im Bereich der Schmierstelle 110 gemessenen Druck und eventuell auch , von einer im Bereich der Schmierstelle 110 gemessenen Temperatur, von einer von dem Schmierstoff gemessenen Viskosität, von einer Dielektrizität des Schmierstoffs, von einem Wassergehalt des Schmierstoffs, von einer an einem Teil der Maschine gemessenen Schwingungsstärke oder von einer von einem Teil der Maschine gemessenen Drehzahl kann der Schmierstoffverbrauch deutlich reduziert werden, da es beispielsweise sein kann, dass bei geringeren Temperaturen weniger Schmierstoff benötigt wird. Zusätzlich kann der Betriebszustand der Maschine sicherer gemacht werden, da die Gefahr einer Unterschmierung reduziert werden kann.

Die Regelung der Schmierstoffzufuhr kann druckabhängig und eventuell auch temperaturabhängig, viskositätsabhängig, dielektrizitätsabhängig, Wassergehalt-abhängig, schwingungsabhängig und/oder drehzahlabhängig erfolgen. Alternativ kann die Regelung der Schmierstoffzufuhr in Abhängigkeit von zwei oder mehr der aufgeführten Parameter erfolgen, wobei eine beliebige Kombination oder Anzahl von Parametern gewählt werden kann in deren Abhängigkeit die Regelung der Schmierstoffzufuhr erfolgt.

Die Schmierstelle 110 kann jeglicher Bereich in einer Maschine sein an der sich zueinander bewegliche Teile der Maschine berühren können, wie beispielsweise Lager oder Dichtungen von rotierenden Wellen. In anderen Worten, die Schmierstelle 110 ist z.B. jene Stelle, an der zwei zueinander bewegliche Teile durch den Schmierstoff vor Beschädigung oder Abnutzung geschützt werden soll.

Die zugeführte Schmierstoffmenge kann beispielsweise in Schmierstoff pro Zeiteinheit, z. B. cm$^3$/min, gemessen oder angegeben werden.

Die Messung erfolgt in einem Bereich der Schmierstelle, worunter beispielsweise ein Bereich zu Verstehen ist, in dem die Temperaturmessung oder die Druckmessung eine Aussage über die bei der Schmierstelle 110 herrschenden Bedingungen zulässt. Dies trifft nicht nur auf den direkten Bereich oder das Volumen zu, das für das Schmiermittel an der Schmierstelle vorgesehen ist, sondern auch beispielsweise auf einen Außenbereich der Maschine in der Nähe der Schmierstelle zu (z. B. weniger als 50 cm, 20 cm oder 10 cm von dem für das Schmiermittel vorgesehenen Bereich entfernt).

Eine Maschine kann dabei jegliches Bauteil sein, das bewegliche Teile aufweist. Dies können beispielsweise Baumaschinen, Industriemaschinen, Fahrzeuge, Motoren, Turbinen, Generatoren, Haushaltsgeräte oder Teile dieser sein.

Der Schmierstoff, auch Schmiermittel genannt, kann beispielsweise Fett, Öl oder ein anderer für die jeweilige Schmierstelle notwendiger oder geeigneter Schmierstoff sein.

Fig. 1 zeigt als konkretes Beispiel zusätzliche optionale oder alternative Implementierungsmöglichkeiten des beschriebenen Konzepts und auch Beispiele für eine mögliche Implementierung der Schmierstoffpumpeinheit 120 und der Steuereinheit 130, die jedoch wie unter anderem auch in den späteren Ausführungsbeispielen gezeigt wird auch auf andere Weise implementiert werden können.

Die Steuereinheit 130 regelt die Schmierstoffmenge basierend auf einem Sensormesssignal. Das Sensormesssignal kann die Steuereinheit 130 von einer Sensoreinheit 140 empfangen. Die Sensoreinheit 140 kann beispielsweise einen Druck, und eventuelle auch eine Temperatur, eine Viskosität des Schmierstoffs (z.B. mit einem Rheometer beispielsweise im Behälter, der Rohrleitung oder in einem Bypass der Rohrleitung messbar), eine von dem Schmierstoff gemessene Dielektrizität (oder gemessene Leitfähigkeit), ein von dem Schmierstoff gemessener Wassergehalt, eine Schwingungsstärke (oder Vibrationsstärke oder Beschleunigungsstärke) an einem Teil der Maschine (z.B. mit einem Beschleunigungsaufnehmer messbar) und/oder eine Drehzahl von einem Teil der Maschine (z.B. Antriebsdrehzahl Hauptantrieb Bohrkopf) in dem Bereich der Schmierstelle messen und das von dem gemessenen Druck abhängige Sensormesssignal der Steuereinheit 130 bereitstellen.

Die Sensoreinheit kann beispielsweise den gemessenen Druck oder die gemessene Temperatur in ein elektrisches Signal umwandeln und dieses Sensormesssignal der Steuereinheit 130 zur Verfügung stellen.

Beispielsweise kann die Sensoreinheit 140 einen Temperatursensor 142 aufweisen, der in einem an der Schmierstelle 110 für das Schmiermittel vorgesehenen Bereich angeordnet ist, um die Temperatur des Schmiermittels an der Schmierstelle 110 zu messen. Für die Temperaturmessung kann ein direkter Kontakt des Temperatursensors mit dem Schmiermittel an der Schmierstelle bevorzugt sein, um eine genaue Temperaturmessung zu erhalten. Alternativ kann der Temperatursensor auch über ein gut thermisch leitfähiges Material (z. B. ein Metall) mit dem Schmiermittel in thermischen Kontakt stehen.

Die Sensoreinheit 140 weist einen Drucksensor auf, der in einem Außenbereich in dem Bereich der Schmierstelle 110 angeordnet ist, um einen Druck außerhalb der Schmierstelle 110 zu messen. Viele Maschinen arbeiten in Umgebungen bei denen der Außendruck deutlichen Schwankungen unterliegt. Da bei ansteigendem Außendruck die Gefahr besteht, dass Verunreinigungen in die Schmierstelle 110 eintreten kann versucht werden, dies durch einen höheren Druck des Schmiermittels durch eine höhere Schmiermittelzufuhr zu verhindern. Umgekehrt kann beispielsweise nach dem beschriebenen Konzept die Schmiermittelzufuhr reduziert werden, wenn der Außendruck geringer wird. Durch eine Berücksichtigung des Außendrucks kann der Schmiermittelverbrauch deutlich reduziert werden.

Unter dem Außenbereich in dem Bereich der Schmierstelle ist z.B. ein Bereich zu verstehen, der nicht in dem Bereich liegt, der für das Schmiermittel vorgesehen ist und auch ein Stück von der Schmierstelle entfernt liegen kann, jedoch Rückschlüsse auf den Außendruck bei der Schmierstelle zulässt. Je nach Maschinengröße kann die Messstelle des Drucksensors beispielsweise maximal 50 cm (oder 20 cm, 10 cm oder 5 cm) von der Schmierstelle 110 entfernt liegen.

In anderen Worten, die Steuereinheit 130 kann die von der Schmierstoffpumpeinheit 120 der Schmierstelle 110 zugeführte Schmierstoffmenge regeln, sodass ein Druck des Schmiermittels an der Schmierstelle 110 gleich ist wie der außerhalb der Schmierstelle 110 gemessene Druck oder höher ist als der außerhalb der Schmierstelle 110 gemessene Druck.

Zusätzlich weist die Sensoreinheit 140 einen weiteren oder zweiten Drucksensor 146 auf, der in einem an der Schmierstelle 110 für das Schmiermittel vorgesehenen Bereich angeordnet ist, um den Druck des Schmiermittels an der Schmierstelle 110 zu messen. Es ist zwar möglich aufgrund der zugeführten Schmierstoffmenge Rückschlüsse auf den Druck des Schmiermittels an der Schmierstelle 110 zu ziehen, jedoch kann sich dies beispielsweise aufgrund von Abnutzungserscheinungen von Dichtungen oder ähnliches im Laufe der Zeit verändern, sodass über einen zweiten Drucksensor 146 an der Schmierstelle 110 eine genauere Aussage über den Druck des Schmiermittels an der Schmierstelle 110 gemacht werden kann.

Beispielsweise kann dann der erste Drucksensor 144 ein erstes Sensormesssignal der Steuereinheit 130 bereitstellen und der zweite Drucksensor 146 ein zweites Sensormesssignal der Steuereinheit 130 bereitstellen. Die Steuereinheit 130 kann dann die von der Schmierstoffpumpeinheit 120 der Schmierstelle 110 zugeführte Schmierstoffmenge basierend auf einem Differenzsignal des ersten Sensormesssignals und des zweiten Sensormesssignals regeln. Dazu kann die Steuereinheit 130 beispielsweise einen Subtrahierer 134 aufweisen, der ein elektrisches Differenzsignal aus dem ersten Sensormesssignal und dem zweiten Sensormesssignal bildet.

Die Bildung eines Differenzsignals ist eine einfache Möglichkeit um die beiden gemessenen Druckwerte miteinander in Verbindung zu bringen und die Schmierstoffzufuhr über das gebildete Differenzsignal zu steuern. Es ist jedoch genauso möglich das erste Sensormesssignal des ersten Drucksensors 144 auf eine andere Weise mit dem zweiten Sensormesssignal des zweiten Drucksensors 146 zu kombinieren.

Fig. 1 zeigt ein Beispiel bei dem sowohl ein Temperatursensor 142 als auch ein erster Drucksensor 144 im Außenbereich der Schmierstelle 110 (vor der Schmierstelle) und ein zweiter Drucksensor 146 in einem an der Schmierstelle 110 für das Schmiermittel vorgesehenen Bereich verwendet, um sowohl eine Temperatur als auch eine Differenzdruckmessung durchführen zu können. Dabei bildet die Steuereinheit 130 aus dem ersten Sensormesssignal des ersten Drucksensors 144 und dem zweiten Sensormesssignal des zweiten Drucksensors 146 ein Differenzsignal. Der Temperatursensor 142 stellt ein drittes Sensormesssignal bereit und die Steuereinheit 130 regelt die von der Schmierstoffpumpeinheit 120 der Schmierstelle 110 zugeführte Schmierstoffmenge basierend auf einem Summensignal des dritten Sensormesssignals und des Differenzsignals. Dazu kann die Steuereinheit 130 einen Summierer 136 aufweisen, der das elektrische Differenzsignal und das elektrische dritte Sensormesssignal zu einem elektrischen Summensignal summiert.

Die Summierung des Differenzsignals und des dritten Sensormesssignals ist eine Möglichkeit um die Information der beiden Drucksensoren und des Temperatursensors für die Regelung der Schmierstoffzufuhr zu verwenden. Es ist jedoch auch möglich das Differenzsignal und das dritte Sensormesssignal auf andere Weise miteinander zu kombinieren, um die Schmierstoffzufuhr zu regeln.

Allgemein kann die Steuereinheit 130 zum Kombinieren des ersten Sensormesssignals des ersten Drucksensors 144 und des zweiten Sensormesssignals des zweiten Drucksensors 146 einen ersten Kombinierer und zur Kombinierung des Ausgangssignals des ersten Kombinierers mit dem dritten Sensormesssignal des Temperatursensors einen zweiten Kombinierer aufweisen.

Optional oder alternativ kann die Steuereinheit 130 einen Regler 132 aufweisen, der ein Vergleichssignal basierend auf einem Vergleich eines Sollwerts w mit dem Sensormesssignal der Sensoreinheit 140, dem zuvor beschriebenen Differenzsignal oder dem zuvor beschriebenen Summensignal erzeugt. Die Steuereinheit 130 kann dann die von der Schmierstoffpumpeinheit 120 der Schmierstelle 110 zugeführte Schmierstoffmenge basierend auf dem Vergleichssignal regeln. Je nach konkreter Implementierung vergleicht der Regler 132 den Sollwert w mit dem Sensormesssignal, dem Differenzsignal oder dem Summensignal. Weist die Sensoreinheit 140 beispielsweise nur einen Drucksensor 144, 146 oder nur einen Temperatursensor 142 auf, dann kann der Sollwert w direkt mit dem Sensormesssignal der Sensoreinheit 140 verglichen werden. Weist die Sensoreinheit 140 beispielsweise einen ersten Drucksensor 144 und einen zweiten Drucksensor 146 auf, kann der Regler 132 den Sollwert w mit dem Differenzsignal vergleichen. Alternativ kann der Regler 132 den Sollwert w mit einem Summensignal vergleichen, wenn die Sensoreinheit 140 entweder einen Temperatursensor 142 und nur einen Drucksensor 144, 146 aufweist oder einen Temperatursensor 142, einen ersten Drucksensor 144 und einen zweiten Drucksensor 146 aufweist, wie im Beispiel von Fig. 1 gezeigt.

Die Schmierstoffpumpeinheit 120 oder Schmierstoffpumpe kann beispielsweise einen Elektromotor 126 aufweisen und die Steuereinheit 130 kann eine Leistung des Elektromotors und dadurch die pro Zeiteinheit geförderte Schmierstoffmenge regeln. Eine mögliche Implementierung der Regelung des Elektromotors 126 ist in Fig. 1 gezeigt. Dazu umfasst die Steuereinheit 130 einen Frequenzumrichter 138, der eine Frequenz des Versorgungsstroms des Elektromotors 126 der Schmierstoffpumpeinheit 120 verändert, um die Drehzahl des Elektromotors und somit die Fördermenge der Schmierstoffpumpeinheit 120 steuert. Dazu ist der Frequenzumrichter 138 beispielsweise mit dem Regler 132 verbunden und wird von dem Vergleichssignal gesteuert.

Zusätzlich kann die Schmierstoffpumpeinheit 120 einen Behälter mit Schmierstoff 122 und ein Ventil 124 zum Befüllen des Behälters 122 aufweisen. Ferner kann die Schmierstoffpumpeinheit 120 über Pumpleitungen mit den Schmierstellen 110 der Maschine verbunden sein. Dabei kann jede Schmierstoffleitung zwischen der Schmierstoffpumpeinheit 120 und der Schmierstelle 110 ein Rückschlagventil 112 aufweisen.

Es ist z.B. möglich, dass der Druck und eventuell auch die Temperatur an einer Schmierstelle 110 gemessen wird und dass die Schmiermittelzufuhr nur dieser Schmierstelle 110 geregelt wird. Alternativ kann der Druck und eventuell auch die Temperatur an nur einer Schmierstelle 110 gemessen werden und in Abhängigkeit davon die Schmiermittelzufuhr zu mehreren Schmierstellen 110 geregelt werden, wie es beispielsweise in Fig. 1 gezeigt ist. Ebenso alternativ kann der Druck und eventuell auch die Temperatur an mehreren Schmierstellen 110 unabhängig voneinander gemessen werden und über die jeweiligen Sensormesssignale die Schmiermittelzufuhr zu den zugehörigen Schmierstellen 110 individuell geregelt werden.

Das beschriebene Konzept kann beispielsweise in einer Verbrauchsschmiereinrichtung oder Umlaufschmiereinrichtung durch Integration der Vorrichtung 100 realisiert werden.

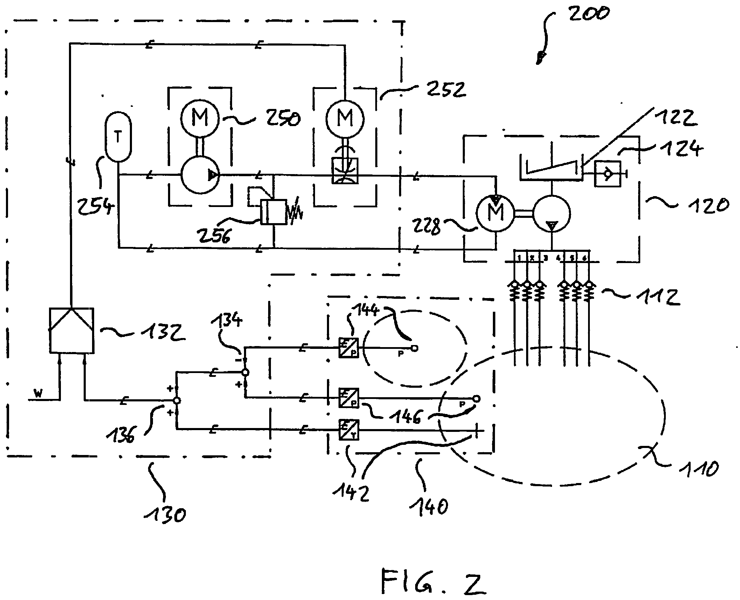

Fig. 2 zeigt ein Blockdiagramm einer Vorrichtung 200 zur Schmiermittelzufuhr zu einer Schmierstelle 110 als ein Ausführungsbeispiel. Der Aufbau der Vorrichtung 200 entspricht großteils jener aus Fig. 1, jedoch weist die Schmierstoffpumpeinheit 120 anstelle eines Elektromotors einen Hydraulikmotor 228 auf. Entsprechend umfasst die Steuereinheit 130 zur Steuerung der Schmierstoffpumpeinheit 120 ein Hydraulikaggregat 250, das über ein Stellventil 252 mit dem Hydraulikmotor 228 der Schmierstoffpumpeinheit 120 verbunden ist. Das Stellventil 252 kann über das Vergleichssignal des Reglers 132 gesteuert werden und drosselt oder öffnet den Strom der Hydraulikflüssigkeit vom Hydraulikaggregat 250 zum Hydraulikmotor 228, sodass so die Leistung des Hydraulikmotors 228 und dadurch die Schmiermittelfördermenge geregelt wird. In anderen Worten, die Schmierstoffpumpeinheit 120 weist einen Hydraulikmotor 228 auf und die Steuereinheit 130 regelt eine Leistung des Hydraulikmotors 228 über ein Stellventil 252 in einer Hydraulikleitung zwischen einem Hydraulikaggregat 250 und dem Hydraulikmotor 228.

Zusätzlich zeigt Fig. 2 einen Hydrauliktank 254, der mit dem Hydraulikaggregat 250 verbunden ist und ein Druckbegrenzungsventil 256 (DBV), das zwischen dem Hydraulikaggregat 250 und dem Stellventil 252 angeordnet ist, um einen Überdruck in der Hydraulikleitung zu verhindern, wenn das Stellventil 252 den Fluss in der Hydraulikleitung stark drosselt.

Die in Zusammenhang mit dem allgemeinen Konzept und/oder dem in Fig. 1 gezeigten Beispiel beschriebenen optionalen oder alternativen Ausführungsformen sind in entsprechender Weise auch für die Vorrichtung 200 realisierbar.

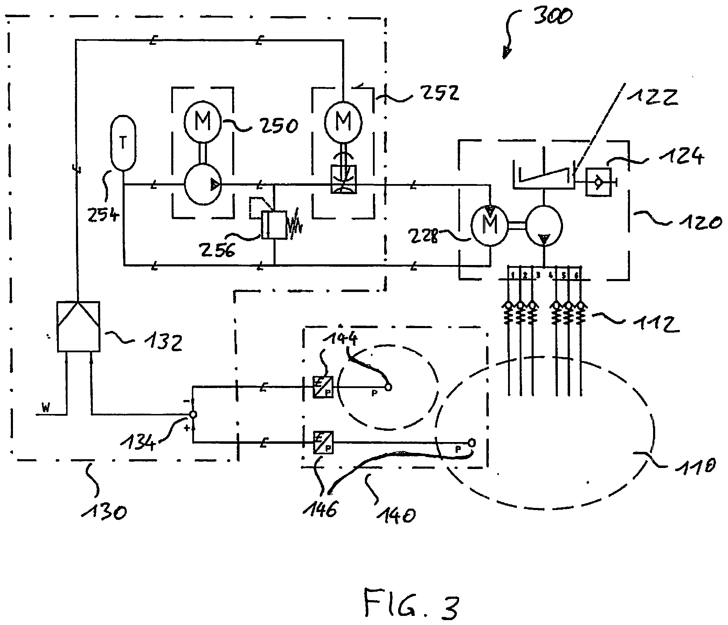

Fig. 3 zeigt ein Blockdiagramm einer Vorrichtung 300 zur Schmiermittelzufuhr zu einer Schmierstelle 110 in einer Maschine als ein Ausführungsbeispiel. Die Vorrichtung 300 entspricht großteils der in Fig. 2 gezeigten Vorrichtung. Jedoch weist die Vorrichtung 300 nur zwei Drucksensoren 144, 146 und keinen Temperatursensor auf. Die Regelung der Schmiermittelzufuhr an die Schmierstelle 110 erfolgt daher druckabhängig, aber nicht temperaturabhängig.

Weitere zusätzliche oder alternative Implementierungsmöglichkeiten, die in Zusammenhang mit dem allgemeinen Konzept und/oder mit den Beispielen in Fig. 1 und 2 beschrieben wurden, sind ebenso für die Vorrichtung 300 realisierbar.

Alternativ kann die Schmierstoffpumpeinheit 120 der in Fig. 1, 2 oder 3 gezeigten Vorrichtung auch eine pneumatische Pumpe aufweisen und die Steuereinheit 130 kann ausgelegt sein, um den Druck in einer Leitung zu der pneumatischen Pumpe, beispielsweise über ein Druckregelventil zwischen Druckluftversorgung und pneumatischer Pumpe, zu regeln. Einige Ausführungsbeispiele beziehen sich auf eine Vorrichtung viskositätsgeregelt (Viskosität des Schmierstoffs...), vibrationsgeregelt (Schwingung der Maschine...) und/oder drehzahlgeregelt (z.B. Bohrkopf-/Antriebsdrehzahl...) ist.

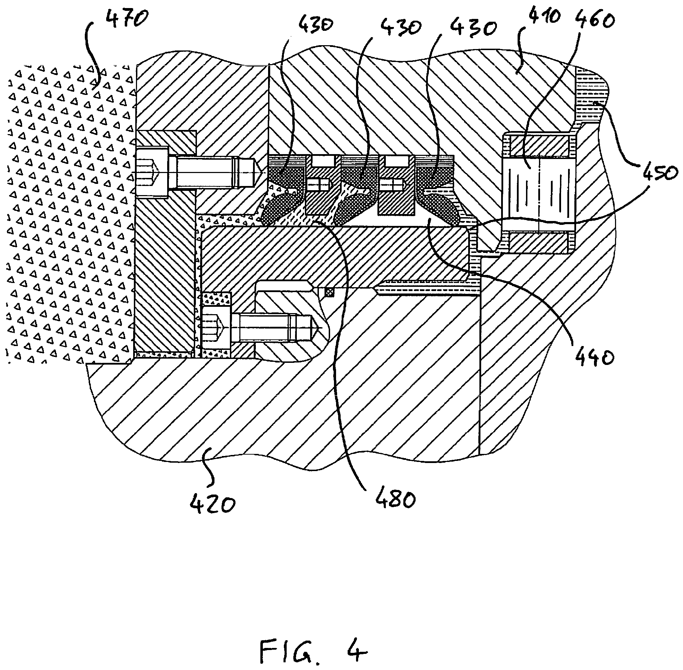

Fig. 4 zeigt einen Teil eines Querschnitts im Bohrkopfantrieb einer Tunnelbohrmaschine. Die Bohrkopfbefestigung 420 rotiert während eines Abbauvorgangs angetrieben durch den Hauptantrieb, abgestützt von einer abgedichteten Lagereinrichtung 460 (z.B. Axial-Zylinderrollenlager), im Laufring für das Axial-Zylinderrollenlager 410. Zwischen dem Laufring 410 und der Bohrkopfbefestigung 420 sind zur Abdichtung des Lagers 460 vor einem Außenbereich 470 (in dem z. B. direkter Kontakt zu Sand, Wasser und Gestein auftritt) drei Wellendichtringe 430 angeordnet. Zwischen dem äußeren Wellendichtring und dem mittleren Wellendichtring ist der Schmierstoff 480 (z. B. Fett) eingebracht, der von der Schmierstoffpumpeinheit zugeführt wird. Zwischen dem mittleren Wellendichtring und dem inneren Wellendichtring ist ein Druckluftraum (440) und innerhalb des inneren Wellendichtrings ist z.B. der Bereich des Lagers 460 mit Öl 450 gefüllt. Eine Temperaturmessung kann beispielsweise im Bereich zwischen dem äußeren und dem mittleren Wellendichtring erfolgen. Eine Druckmessung kann beispielsweise im Bereich zwischen dem Laufring 410 und der Bohrkopfbefestigung 420 auf der dem Schmierstoff 480 abgewandten Seite des äußeren Wellendichtrings erfolgen. Zusätzlich wird eine Druckmessung auch im Bereich der Schmierstelle, zwischen dem äußeren Wellendichtring und dem mittleren Wellendichtring erfolgen. Als Schmierstelle kann hier beispielsweise der gesamte Bereich, indem der Schmierstoff 480 angeordnet ist, oder die Kontaktfläche zwischen äußerem Wellendichtring 430 und Bohrkopfbefestigung 420 angesehen werden.

Eine Anwendung des beschriebenen Konzepts ist beispielsweise eine Tunnelbohrmaschine mit einer Vorrichtung, wie sie beispielsweise in den Fig. 1 bis 3 gezeigt ist.

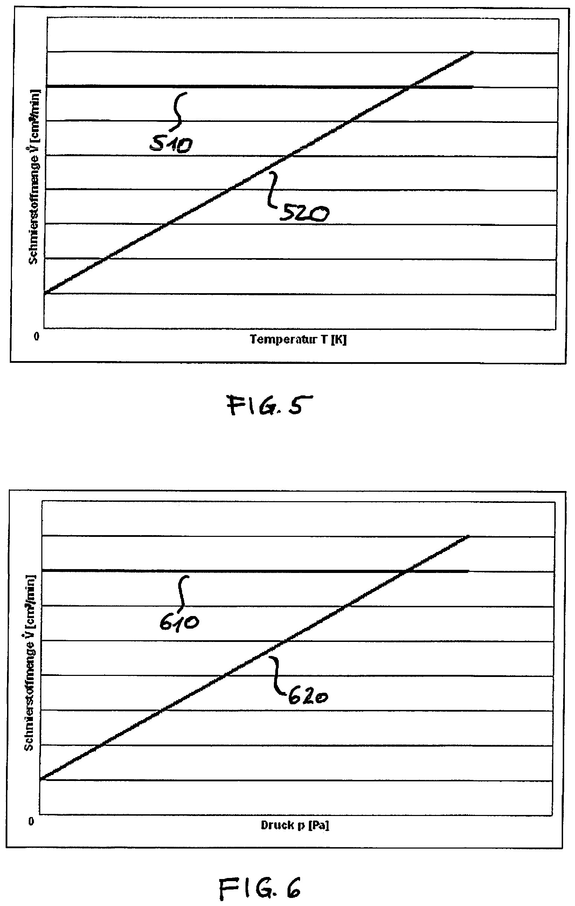

Durch das zuvor beschriebene Konzept beispielsweise in Form der konkreten Ausführungsbeispiele kann der Schmierstoffverbrauch in einer Maschine deutlich reduziert werden. Fig. 5 zeigt ein Diagramm der geförderten Schmierstoffmenge $\dot{V}$ (in cm$^3$/min) über der Temperatur T (in K). Dabei zeigt die horizontale Linie 510 den Schmiermittelverbrauch bei konstanter Schmiermittelzufuhr basierend auf dem ungünstigsten Fall (worstcase-Schmierung) und die schräge Linie 520 den Schmiermittelverbrauch nach dem beschriebenen Konzept unter Berücksichtigung einer gemessenen Temperatur an der Schmierstelle. Dabei kann die zugeführte Schmierstoffmenge bei niedrigeren Temperaturen deutlich reduziert werden, da im Normalfall die Viskosität eines Schmiermittels bei geringeren Temperaturen höher ist.

Fig. 6 zeigt ein Diagramm der geförderten Schmierstoffmenge $\dot{V}$ (in cm$^3$/min) über den Druck p (in Pa). Dabei zeigt die horizontale Linie 610 den Schmiermittelverbrauch bei konstanter worst case Schmierung und die schräge Linie 620 den Schmiermittelverbrauch bei Verwendung des beschriebenen Konzepts. Dabei kann die geförderte Schmierstoffmenge bei geringerem Druck deutlich reduziert werden, da die Gefahr geringer ist, dass Verschmutzungen in die Schmierstelle eintreten.

Einige Ausführungsbeispiele beziehen sich auf ein Verfahren zur Schmierstoffzufuhr zu einer Schmierstelle 110 in einer Maschine. Das Verfahren umfasst ein Empfangen eines Sensormesssignals, das von einer in einem Bereich einer Schmierstelle gemessenen Druck und eventuell in einem Bereich der Schmierstelle gemessenen Temperatur, einer von dem Schmierstoff gemessenen Viskosität, einer von dem Schmierstoff gemessenen Dielektrizität, einem von dem Schmierstoff gemessenen Wassergehalt, einer an einem Teil der Maschine gemessenen Schwingungsstärke oder einer von einem Teil der Maschine gemessenen Drehzahl abhängt, und ein Zuführen von Schmiermittel an die Schmierstelle. Ferner umfasst das Verfahren ein Regeln einer der Schmierstelle 110 zugeführten Schmierstoffmenge basierend auf dem Sensormesssignal.

Das Verfahren kann weitere optionale oder alternative Verfahrensschritte aufweisen, die den zuvor beschriebenen optionalen oder alternativen Vorrichtungsmerkmalen entsprechen.

Einige Ausführungsbeispiele beziehen sich auf eine Vorrichtung, insbesondere eine Pumpe, mit variabler, bedarfsgerechter Schmiermittelfördermengenregulierung. Dies kann beispielsweise überall dort Anwendung finden, wo wechselnde Druck-/TemperaturVerhältnisse ausgeglichen werden müssen, z. B. in Tunnelbohrmaschinen.

Es kann dabei eine Pumpe entwickelt werden, die die Schmierstoffmenge druck- und/oder temperaturabhängig regelt, sodass die Verbrauchsmenge reduziert sowie der Betriebszustand sicherer gemacht werden kann.

Die Schmiermittelzufuhr kann durch das beschriebene Konzept bedarfsgerecht gesteuert werden. Es wird nicht mehr pauschal eine bestimmte Menge Schmierstoff an die Lager und Dichtungen gefördert, die sämtlichen Temperatur- und Druckeinflüssen gerecht werden muss. Deshalb kann erreicht werden, dass der Schmiermittelverbrauch nicht mehr deutlich über der tatsächlich benötigten Menge liegt.

In anderen Worten, durch eine bedarfsgerechte regelbare Schmierstofffördermenge bei Verbrauchs- und/oder Umlaufschmierungen kann eine Überschmierung und damit ein erhöhter Schmierstoffverbrauch größtenteils verhindert werden.

Zum einen kann der Schmierstoffverbrauch bei normalem Betrieb und vor allem im Teillastbetrieb verringert werden. Zum anderen kann bei besonders widrigen Bedingungen bedarfsgerecht auch eine erhöhte Menge Schmierstoff an die Schmierstelle gefördert werden.

In Anwendungsfällen, bei denen an der Schmierstelle unterschiedliche Drücke und Temperaturen auftreten, ist eine geregelte Schmiermenge sinnvoll. Dies ist beispielsweise bei Tunnelbohrarbeiten der Fall. Im sog. Schildvortriebsverfahren werden heutzutage oft diese Tunnelbohrmaschinen (TBM) eingesetzt. Ist eine instabile Ortsbrust zu erwarten, werden spezielle TBM mit Mixschild eingesetzt. Dabei ist die Abbaukammer mit einer Stütz- und Gleitflüssigkeit, der Betonitsuspension, gefüllt, um das Einbrechen der Ortsbrust zu verhindern. Der Druck, der in der Abbaukammer vor dem Bohrkopf dafür aufgebaut wird, entspricht dem ungefähren Erd- und Wasserdruck. Dieser ist u.a. abhängig von Bohrtiefe und Grundwasservorkommen. Er kann variieren und kann im Allgemeinen zwischen 1 und 10 bar betragen.

Der Laufring rotiert während des Abbauvorgangs, abgestützt von der abgedichteten Lagereinrichtung, um die Bohrkopfbefestigung. Dabei kann, wie z.B. in Fig. 4 gezeigt, eine Drehdichtung zum Einsatz kommen. Zur Aufnahme der Kräfte können Wälzlager verwendet werden. Die Wälzlager (z.B. Axial-Zylinderrollenlager) und die Rotationsdichtungen benötigen eine bestimmte Schmierstoffmenge, um den Verschleiß zu verringern und die Dichtheit zu gewährleisten. Dieser Schmierstoff wird von einer Pumpe zu den Schmierstellen gefördert.

Bei herkömmlicher Schmierung bleibt die Menge konstant. Dies führt zu einer konstanten Überschmierung, weil man Unterschmierung vermeiden möchte. Die optimale benötigte Menge an Schmierstoff kann variieren, da Druck und Temperatur in der Abbaukammer sich umgebungsbedingt ändern. Deshalb ist je nach Einsatzbedingungen die Überschmierung mehr oder weniger groß.

Es ist wünschenswert, diese Überschmierungen auf ein Minimum zu reduzieren, und eine bedarfsgerechte, geregelte Menge an Schmierstoff zu den Schmierstellen zu fördern. Die benötigte Fettmenge kann dazu mithilfe eines Kennfelds (Faktor) geregelt werden, abhängig von Umgebungsdruck und Schmierstofftemperatur. Bei sich änderndem Druck und Temperatur kann nämlich unter Umständen eine geringere Fettmenge erforderlich sein, um eine optimale Schmierung zu erzielen. Dieser Faktor kann so gewählt werden, dass bei guten Bedingungen die Fördermenge reduziert und damit Schmierstoff eingespart wird.

Die Schmierstoffpumpe kann weitgehend, bis zu einem Gegendruck von 100 bar oder auch mehr, unabhängig die annähernd gleiche Menge liefern. Der Förderdruck der Pumpe kann sich automatisch an sich ändernde Druckverhältnisse z.B. in einem Bereich der Schmierstelle anpassen, anstatt die Fördermenge konstant zu halten. Deshalb kann die Fördermenge druck- und temperaturabhängig geregelt werden, z.B. durch Kolbenhubverstellung oder Drehzahlanpassung des Antriebmotors (z.B. frequenzgeregelt bei Elektromotoren, oder durchflussgeregelt bei Hydraulikmotoren, oder druckgeregelt bei pneumatischen Antrieben).

Sensoren können hinter der Schmierstelle und vor der Schmierstelle (z.B. in der Abbaukammer) die Umgebungsvariablen Druck und Temperatur messen. Beispielsweise wird an den Schmierstellen derselbe Druck wie in der Abbaukammer bzw. sogar leichter Überdruck benötigt, um das Eindringen von Schmutz hinter die Dichtungen und zum Lager weitestgehend zu verhindern. Über die Fördermenge kann dabei der Druck hinter der Schmierstelle aufgebaut werden. Bei hohem Gegendruck in der Abbaukammer könnte deshalb unter Umständen eine größere Schmierstoffmenge benötigt werden, als bei niedrigem Gegendruck oder gar drucklosem Zustand.

Bei hoher Temperatur kann beispielsweise Fett niedrigviskoser werden, dadurch bietet es weniger Widerstand und entweicht leichter durch die Dichtlippen, weshalb eine größere Fettmenge benötigt werden könnte. Umgekehrt wird bei niedriger Temperatur eine geringere Fettmenge benötigt.

$$\dot{V}_{Schmierstoff} = f\left(p_{Lager,Schmierstelle}, T_{Schmierstoff,Dichtung}\right)$$

Entsprechend kann die Schmierstoffmenge $\dot{V}$ als Funktion der Temperatur (z.B. des Schmierstoffs oder der Dichtung) und/oder des Drucks p (z.B. im Lager und/oder an der schmierstelle) geregelt werden, wie z.B. in Fig. 5 und 6 gezeigt. Schmierstoffeigenschaften können sich mit steigendem Druck verschlechtern verschlechtern (z.B. bei Fett: vermehrte Neigung zum Ausbluten, verschlechterte Schmiereigenschaften, ...). Ebenso erhöht sich der Schmierstoffbedarf mit steigender Temperatur (sinkende Viskosität, daher mehr Leckageverluste, bei Fett zusätzlich: erhöhte Ölabgabe aus dem Verdicker...).

In einigen Beispielen kann ein vorhandenes Hydraulikaggregat die Hydraulikflüssigkeit über ein regelbares Ventil hin zum Hydraulikmotor der Schmierstoffpumpe fördern, bzw. bekommt der Elektromotor über eine Versorgungsleitung Strom, bzw. eine Druckluftversorgung (Kompressor) über ein Druckregelventil einen pneumatischen Antrieb der Schmierstoffpumpe. Die Schmierstoffpumpe kann über ein oder mehrere Pumpenelemente und Leitungen den Schmierstoff zu den jeweiligen Schmierstellen fördern.

An den Schmierstellen können Sensoren den Druck (p) und die Temperatur (T) messen. Diese können in ein elektrisches Einheitssignal (E; z.B. 4...20 mA oder 0...10 V) umgewandelt werden, und gemeinsam an einen Regler (z.B. PID-Regler), der vom Sollwert w beeinflusst wird, weitergeleitet werden.

Der Regler kann die Signale auswerten, und die Drehzahl des Motors der Schmierstoffpumpe über ein Stellventil (Stromregelventil) bei Hydraulikmotoren oder einen Frequenzumrichter bei Elektromotoren oder einen Luftdruck bei pneumatischen Antrieben beeinflussen.

Ein Beispiel für eine automatische druck- und temperaturabhängige Regelung des Förderstroms ist in Fig. 2 dargestellt und in Fig. 3 ist eine druckabhängige automatische hydraulische Steuerung des Förderstroms gezeigt.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen von Bedeutung sein.

Obwohl manche Aspekte der vorliegenden Erfindung im Zusammenhang mit einer Vorrichtung beschrieben wurden, versteht es sich, dass diese Aspekte auch eine Beschreibung eines entsprechenden Verfahrens darstellen, sodass ein Block oder ein Bauelement einer Vorrichtung auch als ein entsprechender Verfahrensschritt oder als ein Merkmal eines Verfahrensschritts, beispielsweise einem Verfahren zum Herstellen oder Betreiben einer Filterkassette, zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

**Bezugszeichenliste**

| | |
|---|---|
| 100 | Vorrichtung zur Schmierstoffzufuhr |
| 110 | Schmierstelle |
| 112 | Rückschlagventil |
| 120 | Schmierstoffpumpeinheit |
| 122 | Behälter mit Schmierstoff |
| 124 | Ventil zum Befüllen |
| 126 | Elektromotor |
| 130 | Steuereinheit |
| 132 | Regler |
| 134 | Subtrahierer |
| 136 | Summierer |
| 138 | Frequenzumrichter |
| 140 | Sensoreinheit |
| 142 | Temperatursensor |
| 144 | erster Drucksensor |
| 146 | zweiter Drucksensor |
| 200 | Vorrichtung zur Schmierstoffzufuhr |
| 228 | Hydraulikmotor |
| 250 | Hydraulikaggregat |
| 252 | Stellventil |
| 254 | Tank |
| 256 | Druckbegrenzungsventil |
| 300 | Vorrichtung zur Schmierstoffzufuhr |
| 400 | Teil eines Bohrkopfs einer Tunnelbohrmaschine |
| 410 | Laufring |
| 420 | Bohrkopfbefestigung |
| 430 | Wellendichtring |
| 440 | Druckluft |
| 450 | Öl |
| 460 | Axial-Zylinderrollenlager |
| 470 | Sand, Wasser, Gestein |
| 480 | Schmierstoff |
| 510 | Schmierstoffverbrauch temperaturunabhängig |
| 520 | Schmierstoffverbrauch temperaturabhängig |

610 Schmierstoffverbrauch druckunabhängig

620 Schmierstoffverbrauch druckabhängig

**Patentansprüche**

1. Vorrichtung (100, 200, 300) zur Schmierstoffzufuhr zu einer Schmierstelle (110) in einer Maschine, mit folgenden Merkmalen:

 einer Schmierstoffpumpeinheit (120), die ausgelegt ist, um einer Schmierstelle (110) Schmierstoff zuzuführen; und
 einer Steuereinheit (130), die ausgelegt ist, um eine von der Schmierstoffpumpeinheit (120) der Schmierstelle (110) zugeführte Schmierstoffmenge basierend auf einem Sensormesssignal zu regeln, wobei das Sensormesssignal von einer von dem Schmierstoff gemessenen Viskosität oder einer von dem Schmierstoff gemessenen Dielektrizität abhängt, ferner umfassend
 eine Sensoreinheit (140), die ausgelegt ist, um eine Viskosität des Schmierstoffs oder eine Dielektrizität des Schmierstoffs, zu messen und das Sensormesssignal der Steuereinheit (130) bereitzustellen,
 wobei die Sensoreinheit (140) einen Drucksensor (144) aufweist, der in einem Außenbereich in dem Bereich der Schmierstelle (110) angeordnet ist, um einen Druck außerhalb der Schmierstelle (110) zu messen, und
 wobei die Sensoreinheit (140) einen zweiten Drucksensor (146) aufweist, der in einem an der Schmierstelle (110) für den Schmierstoff vorgesehenen Bereich angeordnet ist, um den Druck des Schmierstoffs an der Schmierstelle (110) zu messen.

2. Vorrichtung gemäß Anspruch 1, wobei die Sensoreinheit (140) einen Temperatursensor (142) aufweist, der in einem an der Schmierstelle (110) für den Schmierstoff vorgesehenen Bereich angeordnet ist, um die Temperatur des Schmierstoffs an der Schmierstelle (110) zu messen.

3. Vorrichtung gemäß einem der Ansprüche 1 oder 2, wobei die Steuereinheit (130) ausgelegt ist, um die von der Schmierstoffpumpeinheit (120) der Schmierstelle (110) zugeführte Schmierstoffmenge zu regeln, sodass ein Druck des Schmierstoffs an der Schmierstelle (110) gleich oder höher ist als der außerhalb der Schmierstelle (110) gemessene Druck.

4. Vorrichtung nach einem der vorhergehenden Ansprüche, wobei der erste Drucksensor ein erstes Sensormesssignal der Steuereinheit (130) bereitstellt und der zweite Drucksensor ein zweites Sensormesssignal der Steuereinheit (130) bereitstellt, wobei die Steuereinheit (130) ausgelegt ist, um die von der Schmierstoffpumpeinheit (120) der Schmierstelle (110) zugeführte Schmierstoffmenge basierend auf einem Differenzsignal des ersten Sensormesssignals und des zweiten Sensormesssignals zu regeln.

5. Vorrichtung gemäß dem Anspruch 4, wobei der Temperatursensor (142) ein drittes Sensormesssignal bereitstellt, wobei die Steuereinheit (130) ausgelegt ist, um die von der Schmierstoffpumpeinheit (120) der Schmierstelle (110) zugeführte Schmierstoffmenge basierend auf einem Summensignal des dritten Sensormesssignals und des Differenzsignals zu regeln.

6. Vorrichtung gemäß einem der vorhergehenden Ansprüche, wobei die Steuereinheit (130) einen Regler (132) aufweist, der ausgelegt ist, um ein Vergleichssignal basierend auf einem Vergleich eines Sollwerts mit dem Sensormesssignal, dem Differenzsignal oder dem Summensignal zu erzeugen, wobei die Steuereinheit (130) ausgelegt ist, um die von der Schmierstoffpumpeinheit (120) der Schmierstelle (110) zugeführte Schmierstoffmenge basierend auf dem Vergleichssignal zu regeln.

7. Vorrichtung gemäß einem der vorhergehenden Ansprüche, wobei die Schmierstoffpumpeinheit (120) einen Elektromotor (126) aufweist und die Steuereinheit (130) ausgelegt ist, um eine Leistung des Elektromotors (126), beispielsweise über einen Frequenzumrichter (138), zu regeln.

8. Vorrichtung gemäß einem der vorhergehenden Ansprüche, wobei die Schmierstoffpumpeinheit (120) einen Hydraulikmotor (228) aufweist und die Steuereinheit (130) ausgelegt ist, um eine Leistung des Hydraulikmotors (228), beispielsweise über ein Stellventil (252) in einer Hydraulikleitung zwischen einem Hydraulikaggregat (250) und dem Hydraulikmotor (228), zu regeln.

9. Vorrichtung gemäß einem der vorhergehenden Ansprüche, wobei die Schmierstoffpumpeinheit (120) eine pneumatische Pumpe aufweist und die Steuereinheit (130) ausgelegt ist, um den Druck in einer Leitung zu der pneumatischen Pumpe, beispielsweise über ein Druckregelventil zwischen Druckluftversorgung und pneumatischer Pumpe, zu regeln.

10. Vorrichtung gemäß einem der vorhergehenden Ansprüche, wobei eine Dichtung (430), beispielsweise ein Wellendichtring, zwischen der Schmierstelle (110) und einem Außenbereich der Maschine angeordnet ist.

11. Tunnelbohrmaschine mit einer Vorrichtung (100, 200, 300) zur Schmierstoffzufuhr zu einer Schmierstelle (110) in einer Maschine nach einem der vorhergehenden Ansprüche.

12. Tunnelbohrmaschine nach Anspruch 11,
wobei das Sensormesssignal von einer in einem Bereich der Schmierstelle (110) gemessenen Temperatur, einem in einem Bereich der Schmierstelle (110) gemessenen Druck, einer von dem Schmierstoff gemessenen Viskosität, einer von dem Schmierstoff gemessenen Dielektrizität, einem von dem Schmierstoff gemessenen Wassergehalt, einer an einem Teil der Maschine gemessenen Schwingungsstärke oder einer von einem Teil der Maschine gemessenen Drehzahl abhängt.

13. Verfahren zur Schmierstoffzufuhr zu einer Schmierstelle (110) in einer Maschine, mit folgenden Schritten:

Empfangen eines Sensormesssignals, das von einer von dem Schmierstoff gemessenen Viskosität oder einer von dem Schmierstoff gemessenen Dielektrizität abhängt;
Empfangen eines Sensormesssignals, das von einem Druck außerhalb der Schmierstelle (110) abhängt;
Empfangen eines Sensormesssignal, das von dem Druck des Schmierstoffs an der Schmierstelle abhängt;
Zuführen von Schmierstoff an die Schmierstelle (110); und
Regeln einer der Schmierstelle (110) zugeführten Schmierstoffmenge basierend auf den Sensormesssignalen.

**Claims**

1. Device (100, 200, 300) for supplying lubricant to a lubrication point (110) in a machine, having the following features:

a lubricant pump unit (120), which is designed to feed lubricant to a lubrication point (110); and
a control unit (130) which is designed to control a quantity of lubricant supplied to the lubrication point (110) by the lubricant pump unit (120) on the basis of a sensor measurement signal, wherein the sensor measurement signal depends on a measured viscosity of the lubricant or a measured dielectric constant of the lubricant, further comprising
a sensor unit (140), which is designed to measure a viscosity of the lubricant or a dielectric constant of the lubricant and to provide the sensor measurement signal to the control unit (130),
wherein the sensor unit (140) has a pressure sensor (144), which is arranged in an external area in the area of the lubrication point (110), in order to measure a pressure outside the lubrication point (110), and
wherein the sensor unit (140) has a second pressure sensor (146), which is arranged in an area provided for the lubricant at the lubrication point (110), in order to measure the pressure of the lubricant at the lubrication point (110).

2. Device according to Claim 1, wherein the sensor unit (140) has a temperature sensor (142), which is arranged in an area provided for the lubricant at the lubrication point (110), in order to measure the temperature of the lubricant at the lubrication point (110).

3. Device according to either of Claims 1 and 2, wherein the control unit (130) is designed to control the quantity of lubricant supplied to the lubrication point (110) by the lubricant pump unit (120), so that a pressure of the lubricant at the lubrication point (110) is equal to or higher than the pressure measured outside the lubrication point (110).

4. Device according to one of the preceding claims, wherein the first pressure sensor provides a first sensor measurement signal to the control unit (130), and the second pressure sensor provides a second sensor measurement signal to the control unit (130), wherein the control unit (130) is designed to control the quantity of lubricant supplied to the lubrication point (110) by the lubricant pump unit (120) on the basis of a difference signal of the first sensor measurement signal and the second sensor measurement signal.

**5.** Device according to Claim 4, wherein the temperature sensor (142) provides a third sensor measurement signal, wherein the control unit (130) is designed to control the quantity of lubricant supplied to the lubrication point (110) by the lubricant pump unit (120) on the basis of a sum signal of the third sensor measurement signal and the difference signal.

**6.** Device according to one of the preceding claims, wherein the control unit (130) has a controller (132) which is designed to generate a comparison signal on the basis of a comparison of a target value with the sensor measurement signal, the difference signal or the sum signal, wherein the control unit (130) is designed to control the quantity of lubricant supplied to the lubrication point (110) by the lubricant pump unit (120) on the basis of the comparison signal.

**7.** Device according to one of the preceding claims, wherein the lubricant pump unit (120) has an electric motor (126), and the control unit (130) is designed to control an output of the electric motor (126), for example via a frequency converter (138).

**8.** Device according to one of the preceding claims, wherein the lubricant pump unit (120) has a hydraulic motor (228), and the control unit (130) is designed to control an output of the hydraulic motor (228), for example via a control valve (252) in a hydraulic line between a hydraulic unit (250) and the hydraulic motor (228).

**9.** Device according to one of the preceding claims, wherein the lubricant pump unit (120) has a pneumatic pump, and the control unit (130) is designed to control the pressure in a line to the pneumatic pump, for example via a pressure regulating valve between compressed air supply and pneumatic pump.

**10.** Device according to one of the preceding claims, wherein a seal (430), for example a shaft seal ring, is arranged between the lubrication point (110) and an outer area of the machine.

**11.** Tunnel boring machine having a device (100, 200, 300) for supplying lubricant to a lubrication point (110) in a machine according to one of the preceding claims.

**12.** Tunnel boring machine according to Claim 11, wherein the sensor measurement signal depends on a temperature measured in an area of the lubrication point (110), a pressure measured in an area of the lubrication point, a measured viscosity of the lubricant, a measured dielectric constant of the lubricant, a measured water content of the lubricant, a vibration intensity measured on a part of the machine, or a measured rotational speed of a part of the machine.

**13.** Method for supplying lubricant to a lubrication point (110) in a machine, having the following steps:

receiving a sensor measurement signal which depends on a measured viscosity of the lubricant or on a measured dielectric constant of the lubricant;
receiving a sensor measurement signal which depends on a pressure outside the lubricant point (110) ;
receiving a sensor measurement signal which depends on the pressure of the lubricant at the lubrication point;
supplying lubricant to the lubrication point (110), and
controlling a quantity of lubricant supplied to the lubrication point (110) on the basis of the sensor measurement signals.

**Revendications**

**1.** Dispositif (100, 200, 300) destiné à amener du lubrifiant à un point de lubrification (110) dans une machine, le dispositif comprenant les éléments caractéristiques suivants :

une unité de pompe à lubrifiant (120) conçue pour amener du lubrifiant à un point de lubrification (110) ; et
une unité de commande (130) conçue pour réguler une quantité de lubrifiant, amenée au point de lubrification (110) par l'unité de pompe à lubrifiant (120), sur la base d'un signal de mesure de capteur, le signal de mesure de capteur dépendant d'une viscosité mesurée du lubrifiant ou d'une constante diélectrique mesurée du lubrifiant, comprenant en outre
une unité de capteur (140) conçue pour mesurer la viscosité du lubrifiant ou d'un diélectrique du lubrifiant et pour délivrer le signal de mesure de capteur à l'unité de commande (130),

l'unité de capteur (140) comprenant un capteur de pression (144) disposé dans une région extérieure dans la région du point de lubrification (110) pour mesurer une pression à l'extérieur du point de lubrification (110), et l'unité de capteur (140) comprenant un deuxième capteur de pression (146) disposé dans une région prévue pour le lubrifiant au niveau du point de lubrification (110) pour mesurer la pression du lubrifiant au niveau du point de lubrification (110).

2. Dispositif selon la revendication 1, l'unité de capteur (140) comprenant un capteur de température (142) disposé dans une région prévue pour le lubrifiant au point de lubrification (110) pour mesurer la température du lubrifiant au point de lubrification (110).

3. Dispositif selon l'une des revendications 1 ou 2, l'unité de commande (130) étant conçue pour réguler la quantité de lubrifiant amenée au point de lubrification (110) par l'unité de pompe à lubrifiant (120) de sorte que la pression du lubrifiant au point de lubrification (110) soit égale ou supérieure à la pression mesurée à l'extérieur du point de lubrification (110).

4. Dispositif selon l'une des revendications précédentes, le premier capteur de pression délivrant un premier signal de mesure de capteur à l'unité de commande (130) et le deuxième capteur de pression délivrant un deuxième signal de mesure de capteur à l'unité de commande (130), l'unité de commande (130) étant conçue pour réguler la quantité de lubrifiant délivrée par l'unité de pompe à lubrifiant (120) au point de lubrification (110) sur la base d'un signal de différence du premier signal de mesure de capteur et du deuxième signal de mesure de capteur.

5. Dispositif selon la revendication 4, le capteur de température (142) délivrant un troisième signal de mesure de capteur, l'unité de commande (130) étant conçue pour réguler la quantité de lubrifiant, délivrée par l'unité de pompe à lubrifiant (120) au point de lubrification (110), sur la base d'un signal de somme du troisième signal de mesure de capteur et du signal de différence.

6. Dispositif selon l'une des revendications précédentes, l'unité de commande (130) comportant un régulateur (132) conçu pour générer un signal de comparaison sur la base d'une comparaison d'une valeur de consigne avec le signal de mesure de capteur, le signal de différence ou le signal de somme, l'unité de commande (130) étant conçue pour réguler la quantité de lubrifiant, amenée par l'unité de pompe à lubrifiant (120) au point de lubrification (110), sur la base du signal de comparaison.

7. Dispositif selon l'une des revendications précédentes, l'unité de pompe à lubrifiant (120) comprenant un moteur électrique (126) et l'unité de commande (130) étant conçue pour réguler la puissance du moteur électrique (126), par exemple par le biais d'un convertisseur de fréquence (138).

8. Dispositif selon l'une des revendications précédentes, l'unité de pompe à lubrifiant (120) comprenant un moteur hydraulique (228) et l'unité de commande (130) étant conçue pour réguler la puissance du moteur hydraulique (228), par exemple par le biais d'une vanne de régulation (252) située dans une conduite hydraulique entre un groupe hydraulique (250) et le moteur hydraulique (228).

9. Dispositif selon l'une des revendications précédentes, l'unité de pompe à lubrifiant (120) comprenant une pompe pneumatique et l'unité de commande (130) étant conçue pour réguler la pression dans une conduite menant à la pompe pneumatique, par exemple par le biais d'une vanne de régulation de pression située entre l'alimentation en air comprimé et la pompe pneumatique.

10. Dispositif selon l'une des revendications précédentes, une garniture d'étanchéité (430), par exemple une garniture d'étanchéité d'arbre, étant disposée entre le point de lubrification (110) et une région extérieure de la machine.

11. Perceuse à tunnel comprenant un dispositif (100, 200, 300) destiné à amener du lubrifiant à un point de lubrification (110) dans une machine selon l'une des revendications précédentes.

12. Perceuse de tunnel selon la revendication 11,
le signal de mesure de capteur dépendant d'une température mesurée dans une région du point de lubrification (110), d'une pression mesurée dans une région du point de lubrification (110), d'une viscosité mesurée du lubrifiant, d'une constante diélectrique mesurée du lubrifiant, d'une teneur en eau mesurée du lubrifiant, d'une amplitude de vibration mesurée au niveau d'une partie de la machine ou d'une vitesse de rotation mesurée au niveau d'une partie de la machine.

**13.** Procédé d'amenée de lubrifiant à un point de lubrification (110) dans une machine, le procédé comprenant les étapes suivantes :

recevoir un signal de mesure de capteur qui dépend d'une viscosité mesurée du lubrifiant ou d'une constante diélectrique mesurée du lubrifiant ;
recevoir un signal de mesure de capteur qui dépend d'une pression extérieure au point de lubrification (110) ;
recevoir un signal de mesure de capteur qui dépend de la pression du lubrifiant au point de lubrification ;
amener du lubrifiant au point de lubrification (110) ; et
réguler une quantité de lubrifiant, amenée au point de lubrification (110), sur la base des signaux de mesure de capteur.

FIG. 1

EP 2 772 675 B1

FIG. 2

EP 2 772 675 B1

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6546785 B
- US 20030062197 A1